# EUROPEAN PATENT SPECIFICATION

(11) **EP 2 454 401 B1**
(45) Date of publication and mention of the grant of the patent: **26.12.2018**
(21) Application number: 10800138.9
(22) Date of filing: 10.06.2010
(51) Int. Cl.: B29C 47/02, B29B 15/12, D06B 1/08, D02G 3/18, C03C 25/26

(54) **METHOD FOR MAKING AN EXTRUSION COATED NON-TWISTED YARN**
HERSTELLVERFAHREN FÜR EIN EXTRUSIONSBESCHICHTETES UNGEDREHTES GARN
PROCÉDÉ DE FABRICATION POUR UN FIL NON TORSADÉ ENDUIT PAR EXTRUSION

(30) Priority: 16.07.2009 US 255965 P
(43) Date of publication of application: 23.05.2012
(73) Proprietor: Saint-Gobain ADFORS Canada, Ltd., Grand Island, NY 14072 (US)
(72) Inventor: BROWN, Nancy, E., New Braintree MA 01531 (US); KERBRAT, Armel, Aachen (DE); DANIEL, Eric, 92400 Neuilly sur Seine (FR)
(74) Representative: Zimmermann & Partner Patentanwälte mbB
(86) International application number: PCT/US2010/001662
(87) International publication number: WO 2011/008235

(56) References cited:
- EP-A1- 0 087 757
- EP-A2- 0 226 420
- WO-A1-91/15434
- FR-A1- 2 548 084
- JP-A- S58 132 514
- US-A- 3 679 507
- US-A- 3 800 019
- US-A- 3 993 726
- US-A- 4 614 678
- US-A- 4 899 688
- US-A- 4 927 445
- US-A1- 2003 157 280
- US-A1- 2006 248 926

## Description

### FIELD OF THE INVENTION

The invention relates to a method of making an extrusion coated yarn.

### BACKGROUND

US 6,254, 817 discloses an extrusion coated reinforcement yarn. The reinforcement yarn is made with glass fibers possessing a high elastic modulus. A continuous, thin protective coating of a thermoplastic resin material protects the glass fibers from contact with moisture and alkali environments.

The extrusion-coated reinforcement yarn can be used to make a mesh reinforcement sheet. In turn, the mesh is used to reinforce a cementitious matrix, such as cementitious gypsum, stucco or portland cement. Alternatively, an individual extrusion-coated reinforcement yarn itself can be used to reinforce a cementitious matrix.

An extrusion coated reinforcement yarn is manufactured by making glass filaments, and combining the glass filaments to make the yarn. Typically, the glass filaments are twisted to form a twisted yarn. Then the twisted yarn is co-extruded with a molten thermoplastic resin material. The co-extrusion process is required to produce a uniformly distributed, thin extrusion coating continuously over the surface of the yarn.

US 5,451,355 discloses a cross-head tip and extrusion die assembly for coextruding a twisted yarn with a molten thermoplastic resin material. The yarn is continuously fed to a cross-head tip of the assembly. The molten resin material is continuously supplied by an extrusion apparatus to a chamber in the cross-head tip, wherein the resin material uniformly distributes about the yarn prior to co-extrusion. Co-extrusion is performed by passage of the yarn and the molten resin material through a round co-extrusion die of the assembly. Further technological background information is disclosed in US 3 679 507 A, US 4 614 678 A, FR 2 548 084 A1, EP 0 226 420 A2, EP 0 087 757 A1 and US 3 800 019 A.

Twisted yarn is manufactured with individual glass filaments. For example, 200-1200 glass filaments are manufactured by drawing molten glass through a platinum alloy bushing that may contain up to several hundred orifices. The bushing produces continuous, drawn glass filaments that solidify as they emerge from its orifices. The filaments emerging from the bushing are continuously sized with a fluent sizing composition, then gathered into a strand and wound into intermediate forming package (cake) for further processing steps.

Extrusion coating of a twisted yam is reasonably common. A twisting process is performed during yarn manufacturing. After appropriate temperature and humidity conditioning the strands of the forming cakes are continuously twisted on a ring twister in Z-twist or S-twist directions, which produces a round twisted yarn. Extrusion coating of a twisted yarn is reasonably common.

This round yarn is extrusion coated by passing continuously through a round co-extrusion die, a die having a round extrusion orifice. While the round yarn passes continuously through the round extrusion orifice, the round yarn will self-center concentrically in the round extrusion orifice. This enables the round extrusion die to uniformly distribute extrusion pressure surrounding the round yarn. As a result, the co-extruded molten thermoplastic resin material distributes uniformly over the surface of the round yarn. Such uniform pressure distribution enables formation of a uniform, thin coating of thermoplastic material continuously over the surface of the round yarn. Extrusion coating of a round yam can be done at speeds >300 m./min., which produces a high quality yarn with a round shape.

A twisting process and associated manufacturing equipment has been required to produce a round yarn, which is suitable for extrusion coating. It would be desirable to eliminate the twisting process by producing non-twisted yarn for extrusion coating. However, non-twisted yarn possesses an asymmetrical cross section that has been unsuitable for extrusion coating. The asymmetrical cross section transported through a co-extrusion die produces uneven pressure distribution of the molten thermoplastic resin around the yarn. As a result, extrusion coating of such yams is difficult due to the asymmetric and unstable resin flow patterns that occur in the die during extrusion. Consequently, the co-extrusion die has difficulty applying a uniformly thin coating continuously on the surface of the yarn. As a result of this asymmetric resin flow, the yam possesses a resin coating that is asymmetric around the yam. The thermoplastic resin tends to be thicker in places and thinner in other places, and can possess undesired voids. This lack of roundness and lack of centering of such a yam is unacceptable.

It would be desirable to produce a non-twisted yarn suitable for extrusion coating. Further, it would be advantageous to provide an extrusion coated reinforcement yarn that is non-twisted and yet has a uniformly thin coating of the thermoplastic resin, and a method of manufacturing the same.

### SUMMARY OF THE INVENTION

The present invention provides a method of making an extrusion coated reinforcement yarn according to claim 1.

### BRIEF DESCRIPTION OF THE DRAWINGS

Embodiments of the invention will now be described by way of example with reference to the accompanying drawings.
FIGURE 1 is a schematic view of apparatus for manufacture of continuous non-twisted glass filaments and a continuous non-twisted yarn, and a cross-head extrusion tip and die assembly for manufacture of an extrusion coated glass yarn.
FIGURE 2 is a schematic view of extrusion apparatus having the cross-head extrusion tip and die assembly of Fig. 1.
FIGURE 3 discloses cross-sections of extrusion coated yarns having TD37 sizing.
FIGURE 4 discloses cross-sections of extrusion coated yarns having 5251 sizing.

### DETAILED DESCRIPTION

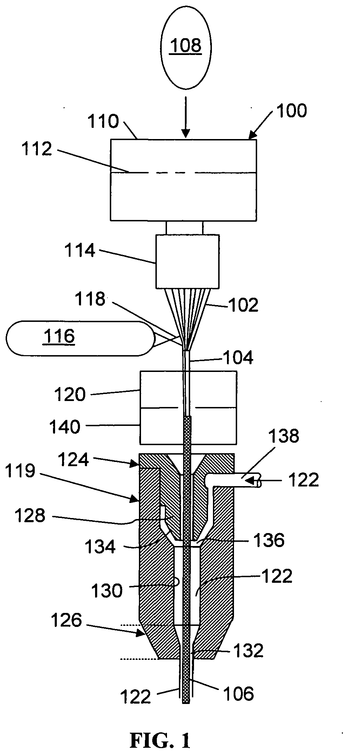

Fig. 1 is a schematic diagram of an apparatus 100 to manufacture continuous non-twisted glass filaments 102 and a continuous non-twisted yarn 104 suitable for manufacturing an extrusion coated reinforcement yarn 106. Fig. 1 discloses a glass composition 108 supplied in a direction indicated by an arrow to a furnace 110 for heating the glass composition 108 to provide molten glass 112. Depending on the composition 108, the glass 112 comprises E-glass, D glass, R glass, C glass, or AR glass. AR glass itself is alkali resistant, and relies on an extrusion coating 122 for additional protection.

The molten glass 112 exits the furnace 110 through a bushing or forming die 114. The molten glass 112 is drawn through numerous miniature orifices of the bushing or forming die 114 to produce drawn glass filaments 102 numbering from 800 to 1200. The glass filaments 102 leaving the bushing or forming die 114 solidify sufficiently to increase their tensile modulus.

A sizing (size) applicator 116 applies an adherent sizing (size) composition 118 onto the filaments 102, preferably by leaching. Before the sizing has an opportunity to dry, the sizing coated (sized) filaments 102 are gathered together side-by-side without twisting and without interlocking to one another. After applying the sizing the filaments gathered together into a strand are wound on a sleeve placed on the take up device (winder) to build the forming package (cakes). The cakes are then dried and cured in an oven to remove the excess of water and allows the film formation of the sizing necessary for further processing operations.. The adherent sizing composition 118 is dried to bind the filaments 102 together and form a sizing coated (sized) non-twisted yarn 104. After forming, the cakes contain excess water and are dried, and especially when unwound, the cakes must be dry.

The sizing (size) composition 118 adheres to the filaments 102 to create a bond between the glass and an extrusion coating 122 to be applied onto the non-twisted yarn 104. The sizing composition 118 adheres to the filaments 102, and the filaments 102 adhere to one another side-by-side to provide a sized non-twisted yarn 104. A sized yarn 104 refers to the yarn having filaments 102 with the sizing composition 118 coating the filaments 102 and adhering them to one another. A non-twisted yarn 104 refers to the filaments 102 thereof having zero twist, i.e. being non-twisted and non-interlocked together, and adhered together by the adherent sizing composition 118.

Preferably, the sizing composition 118 becomes less adherent in a molten thermoplastic resin including but not limited to polyethylene, isotactic or syndio polypropylene, polyester, ethylene-propylene copolymers of other olefin fibers, nylon, polyvinyl chloride, copolymer of polybutylene and propylene, ethylene propylene rubber (EPR), thermoplastic polyolefin rubber (TBR), polyvinylidene chloride (SARAN.RTM.) or ethylene-propylene diene monomer (EPDM).

Fig. 1 discloses a co-extrusion apparatus 119 having a cross-head extruder tip 124 and die assembly 126 for impregnation and continuous coating of the non-twisted yarn 104 with a molten thermoplastic resin 122. The sized yarn 104 is continuously cross-fed to the cross-head extruder tip 124. The sized yarn 104 is transported through a cross head passage 128, then concentrically through a die head cavity 130 in the die assembly 126, and extruded through an outlet orifice 132 of the die assembly 126. Fig. 1 discloses the sized yarn 104 directly transported to the cross-head extruder tip 124 and die assembly 126 after application of the sizing composition 118. Alternatively, the sized yarn 104 is reeled into a continuous coil and packaged in a cake package for shipping and handling. The sized yarn 104 in a cake package is known as a cake yarn. The cake yarn is payed-out, i.e., un-reeled from the cake package and continuously cross-fed to the cross-head extruder tip 124. The cake yarn is transported through a cross head passage 128, then concentrically through a die head cavity 130 in the die assembly 126, and extruded through an outlet orifice 132 of the die assembly 126.

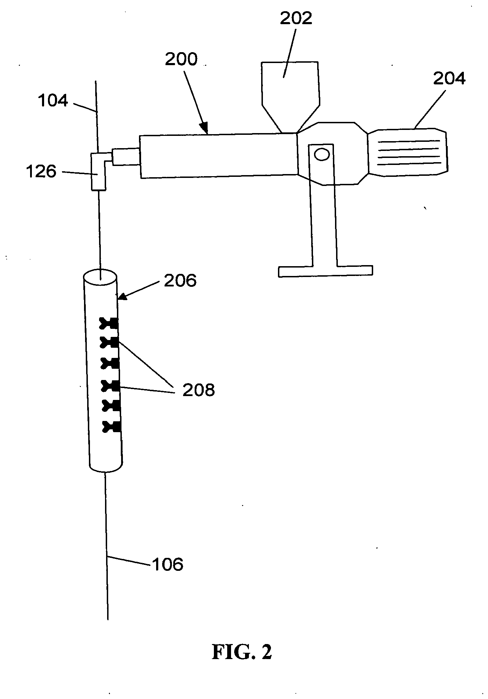

The cross head passage 128 extends through a frusto-conical end 134 of the cross-head extruder tip 124, where the passage 128 is surrounded by a concentric chamber 136 filled with the molten thermoplastic resin 122 under pressure. The molten thermoplastic resin 122 under pressure fills the chamber 136 and surrounds the concentric cross-head end 134. The chamber 136 communicates with a feed duct 138 into which is continuously fed the molten thermoplastic resin 122 under pressure from an extruder 200, Fig. 2. The extruder 200 has an input hopper 202 into which is continuously supplied meltable pellets of thermoplastic resin 122, which are heated and driven under pressure of a drive screw in the extruder 200 to the feed duct 138. A motor 204 is provided to turn the screw drive. The cross-head end 134 and the metal material surrounding the chamber 136 are at an elevated melting temperature of the molten thermoplastic resin 122 to maintain continuous melt flow. Following coextrusion, the extrusion coated reinforcement yarn 106 is transported through a cooling device 206 downstream from the die assembly 126. The cooling device 206 has a series of nozzles 208 for spraying cooling water into the interior of the cooling device 206. Further details of the apparatus 100 are described in US 5,451,355.

By means of this specific internal structure, when the yarn 104 in the die head cavity 130 comes into contact with the molten thermoplastic resin 122 under pressure, the latter distributes uniform radial pressure on the entire periphery of the yarn 104 as soon as contact is established. As a result, all the filaments 102 in the yarn 104 are subjected to the same pressure.

The sizing composition 118 temporarily holds the filaments 102 together, while the yarn 104 is transported through the cross-head 124. As the yarn 104 is transported along the die head cavity 130, the sizing composition on the filaments 102 is contacted by the surrounding molten thermoplastic resin 122. The sizing composition 118 on the filaments 102 softens by immersion in the heat and chemical composition of the molten thermoplastic resin 122 under pressure. Thereby the sizing composition 118 is rendered ductile and loses its tensile strength. The filaments 102 that are held by the ductile sizing composition 118 are free to move by deforming the ductile sizing composition 118. The sizing composition 118 is rendered ductile, which frees the filaments 102 to move under radial pressure applied thereto by the molten thermoplastic resin 122 surrounding the yarn 104 and the filaments 102. As a result, the sizing composition 118 becomes ductile in the molten thermoplastic resin 122 to free the non-twisted glass filaments 102 for movement radially inward of the yarn 1-4, while within the molten thermoplastic resin 122 under pressure, to provide the non-twisted yarn 104 with an essentially round cross-section. As the cavity 130 progressively narrows in a direction toward the round outlet orifice 132, the corresponding unit pressure increases radially inward on the non-twisted glass filaments 102 to move them radially inward to form the yarn 104 with a circular or round cross-section. The yarn 104 having freed glass filaments 102 and the molten thermoplastic resin 122 are co-extruded by transport through the round outlet orifice 132. The molten thermoplastic resin 122 is transported under pressure, while the yarn 104 is transported by pulling tension, for example.

The outlet orifice 132 is machined with a round orifice to distribute uniform pressure of the molten thermoplastic resin 122 over the surface of the yarn 104, and is dimensioned to apply a uniformly thin coating of thermoplastic resin 122 surrounding a non-twisted yarn 104. The yarn 104 has essentially a round cross-section obtained by moving the freed glass filaments 102 under radial pressure applied by the molten thermoplastic resin 122 itself under pressure. Upon exiting from the outlet orifice 132 is an extrusion coated reinforcement yarn 104, The yarn 104 being non-twisted and having non-twisted glass filaments 102. The non-twisted glass fibers 102 are gathered together to provide the yarn 104 with an essentially round cross-section. The resin forms a uniformly distributed, thin extrusion coating 122 on the yarn 104. According to an embodiment of the invention, the surface of the sized yarn 104 can be heated prior to being cross-fed to the co-extrusion apparatus 119. The surface of the sized yarn 104 is heated to the melt temperature or slightly above the melt temperature of either one of, the sizing composition, the sizing composition including a film former composition or the molten thermoplastic resin 122.

Fig. 1 discloses the sized yarn 104, alternatively a cake yarn, transported continuously through a pre-heater oven 140. The non-twisted yarn is manufactured at a greater production speed compared to twisted yarn. As an advantageous result, the greater production speed enables performance of extrusion coating of the non-twisted yarn at a corresponding greater production speed. An embodiment of the invention advantageously uses untwisted yarns at high production speed. Twisted yarns can be used by a process step of untwisting the twisted yarns at high production speed.

### Example

Cake yarns of non-twisted E glass filaments 33 tex (9 micron filaments) were produced using the apparatus of Figs. 1 and 2, and were coated with different non-adhesive sizing compositions: Part Numbers: T61 (starch oil binder); 5339 (starch free sizing composed of a modified maleic anhydride propylene as film former and an amino silane); 5251 (starch oil sizing with adhesion promoters for coating with PVC plastisol); TD37 (starch free sizing with film former having a melting point of about 40 -50°C., which are commercially available from Vetrotex France S. A., Chambery, France. The filaments were combined together, side by side without twisting and without interlocking to provide a non-twisted sized yarn. The sized yarn had random cross section dimensions provided by the side-by-side filaments.

Different samples of the sized yarn were co-extruded with a thermoplastic resin composition of filled PVC resin, according to the following manufacturing parameters, as follows:
cake yarn: 33 tex (9 micron filaments)
sizing composition types for respective samples: T61 (average sizing content applied on the filaments: 1,00%); 5339 (Sizing content applied on the filaments in a range of 0,4% to 1,00%); 5251(average sizing content applied on the filament: 0,85%) ; TD37 sizing TD37 includes a film former composition and has a melt temperature range of 40 °C -50 °C. (average sizing content applied on the filaments: 0,60%). Other film former compositions are available with different melt temperature ranges, for example, a preferred melt temperature range of 30 °C - 140 °C and most preferred melt temperature range of 40 °C - 60 °C. The TD37 sizing has a melt temperature within the most preferred melt temperature range.
coating composition: filled PVC resin
DPU for respective samples: 140%; 170%; 230%
co-extrusion speed range: 800-1000 m/min.
tooling temperature range: 187.8 °C-193.3 °C (370-380 °F)
extruder pressure: 1900-2000 psi
pre-heater oven temperature for respective samples: ambient; 320 °C (600 °F));
540 °C (1000 °F)); 700 °C (1300 °F). The surface of the glass yarn is heated to a melt temperature or slightly higher than the melt temperature of either one of the sizing composition, the sizing composition including the melt former composition or the extrusion coating prior to the extrusion process steps.

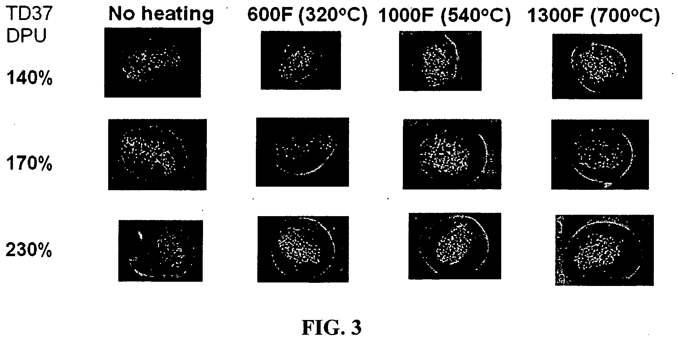

Fig. 3 discloses roundness of yarn cross-section and roundness of resin coating TD37 produced at different DPU values of the Example and different preheater temperatures of the Example. Sizing TD37 contains a film former having a melt temperature range of 40 °C -50 °C. The cross-sections indicate roundness of yarn cross-section improves with heating to temperature values above 540 °C (1000 °F). The cross-sections indicate roundness of the resin coating improves with higher DPU values.

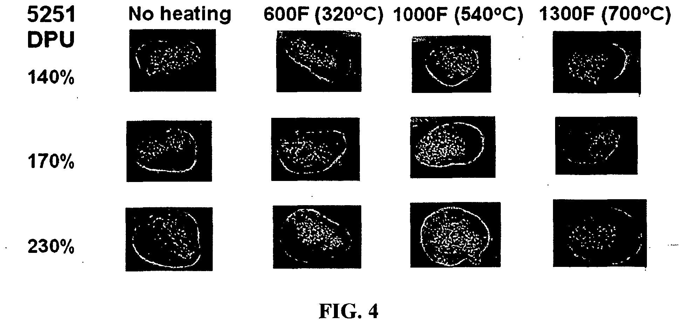

Fig. 4 discloses roundness of yarn cross-section and roundness of resin coating 5251 produced at different DPU values and different preheater temperatures. The cross-sections indicate roundness of yarn cross-section improves with heating to temperature values above 540 °C (1000 °F). The cross-sections indicate roundness of the resin coating improves with higher DPU values. The temperatures in Fig. 4 are the temperature settings of the preheater. When the yarn is moving at 800-1000 m/min, the residence time in the preheater is 0.1 to 0.09 seconds. Due to the residence time, the preheater temperature must be set quite high to actually achieve a temperature that allows the size to melt. If the preheater was longer or the yarn was moving slower, the temperature setting of the preheater would have to be reduced. The unexpected result is accomplished by a balanced adjustment of yarn speed through the preheater, preheater length, size melting temperature, and preheater temperature to achieve the following:
1.) melted size, sizing, that frees up the glass filaments of the cake yarn so that they are free to move (round-up) under the pressure of the crosshead.
2.) a warm yarn that allows the resin in the crosshead to penetrate and adhere better to outer surfaces of filaments at an outer edge or outer surface of the yarn bundle.

This description of the exemplary embodiments is intended to be read in connection with the accompanying drawings, which are to be considered part of the entire written description. In the description, relative terms such as "lower," "upper," "horizontal," "vertical,", "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description and do not require that the apparatus be constructed or operated in a particular orientation. Terms concerning attachments, coupling and the like, such as "connected" and "interconnected," refer to a relationship wherein structures are secured or attached to one another either directly or indirectly through intervening structures, as well as both movable or rigid attachments or relationships, unless expressly described otherwise.

## Claims

1. A method of making an extrusion coated reinforcement yarn (106), comprising:
coating non-twisted glass filaments (102) numbering 800 to 1200 with an adherent starch free sizing composition (118), combining the filaments together side-by-side without twisting and without interlocking to one another, and drying the adherent starch free sizing composition to bind the filaments together to provide a sized non-twisted yarn;
distributing a molten thermoplastic resin (122) around the sized non-twisted yarn prior to coextrusion, wherein the sizing composition becomes ductile in the molten thermoplastic resin to free the non-twisted glass filaments for movement within the molten thermoplastic resin and radially inward of the yarn within the molten thermoplastic resin; and
coextruding the non-twisted yarn and the molten thermoplastic resin to move the non- twisted glass filaments laterally of their lengths within the molten thermoplastic resin and provide the non-twisted yarn with an essentially round cross-section, wherein the yarn is non- twisted and is coated with an essentially uniform thin coating of the thermoplastic resin and wherein the thermoplastic resin penetrates and adheres to an outer surface of the filaments at an outer surface of the yarn bundle.

2. The method of claim 1, comprising: heating a surface of the non-twisted yarn and the starch free sizing composition to a melt temperature of the starch free sizing composition prior to coextruding the yarn and the resin.

3. The method of claim 1, comprising:
combining the starch free sizing composition (118) with a film former composition; and
heating a surface of the non-twisted yarn at least to a melting temperature of the starch free sizing composition with the film former composition prior to distributing a molten thermoplastic resin around the non-twisted yarn.

4. The method of claim 1, comprising: heating a surface of the non-twisted yarn to a temperature of a molten thermoplastic resin prior to distributing the molten thermoplastic resin around the non-twisted yarn.

5. The method of claim 1, comprising: packaging the sized yarn to provide a cake yarn.

6. The method of claim 1, wherein the starch free sizing composition (118) includes a film former composition and has a melting point of about 40°C to 50°C.

7. The method of claim 1, wherein the starch free sizing composition (118) is present on the glass filaments in a range of 0.4% to 1.00%.

## Patentansprüche

1. Verfahren zum Herstellen eines extrusionsbeschichteten Verstärkungsgarns (106), umfassend:
Beschichten von nicht verzwirnten Glasfilamenten (102), umfassend Titer 800 bis 1.200 aufweisen, mit einer anhaftenden stärkefreien Schlichtezusammensetzung (118), Kombinieren der Filamente nebeneinander, ohne sich miteinander zu verhaken, und Trocknen der anhaftenden stärkefreien Schlichtezusammensetzung, um die Filamente zusammenzubinden, um ein geschlichtetes nicht verzwirntes Garn bereitzustellen;
Verteilen eines schmelzflüssigen thermoplastischen Harzes (122) um das geschlichtete nicht verzwirnte Garn vor der Coextrusion, wobei die Schlichtezusammensetzung in dem schmelzflüssigen thermoplastischen Harz streckbar wird, um die nicht verzwirnten Glasfilamente zur Bewegung in dem schmelzflüssigen thermoplastischen Harz und radial ins Innere des Garns in dem schmelzflüssigen thermoplastischen Harz frei zu machen; und
Coextrudieren des nicht verzwirnten Garns und des schmelzflüssigen thermoplastischen Harzes, um die nicht verzwirnten Glasfilamente lateral zu ihren Längen in dem schmelzflüssigen thermoplastischen Harz zu bewegen und das nicht verzwirnte Garn mit einem weitgehend runden Querschnitt bereitzustellen, wobei das Garn nicht verzwirnt ist und mit einer weitgehend gleichförmigen Beschichtung des thermoplastischen Harzes beschichtet ist, und wobei das thermoplastische Harz zu einer äußeren Oberfläche der Filamente an einer äußeren Oberfläche des Garnbündels durchdringt und anhaftet.

2. Verfahren nach Anspruch 1, umfassend: Erwärmen einer Oberfläche des nicht verzwirnten Garns und der stärkefreien Schlichtezusammensetzung bis zu einer Schmelztemperatur der stärkefreien Schlichtezusammensetzung vor Coextrudieren des Garns und des Harzes.

3. Verfahren nach Anspruch 1, umfassend:
Kombinieren der adhärierenden stärkefreien Schlichtezusammensetzung (118) mit einer Filmbildnerzusammensetzung; und
Erwärmen einer Oberfläche des nicht verzwirnten Garns bis zu einer Schmelztemperatur der stärkefreien Schlichtezusammensetzung mit der Filmbildnerzusammensetzung vor dem Verteilen eines schmelzflüssigen thermoplastischen Harzes um das nicht verzwirnte Garn.

4. Verfahren nach Anspruch 1, umfassend: Erwärmen einer Oberfläche des nicht verzwirnten Garns bis zu einer Temperatur eines schmelzflüssigen thermoplastischen Harzes vor dem Verteilen des schmelzflüssigen thermoplastischen Harzes um das nicht verzwirnte Garn.

5. Verfahren nach Anspruch 1, umfassend: Aufmachen des geschlichteten Garns, um ein Spinnkuchengarn bereitzustellen.

6. Verfahren nach Anspruch 1, wobei die stärkefreie Schlichtezusammensetzung (118) eine Filmbildnerzusammensetzung einschließt und einen Schmelzpunkt von etwa 40 °C bis 50 °C hat.

7. Verfahren nach Anspruch 1, wobei die stärkefreie Schlichtezusammensetzung (118) eine Filmbildnerzusammensetzung auf den Glasfilamenten im Bereich von 0,4 % bis 1,00 % vorliegt.

## Revendications

1. Procédé de fabrication d'un fil de renfort enduit par extrusion (106), le procédé comprenant:
le revêtement de filaments de verre non torsadés (102) numérotés de 800 à 1200 par une composition adhérente d'encollage exempte d'amidon (118), la combinaison des filaments côte à côte, conjointement, sans torsion et sans verrouillage l'un avec l'autre, et le séchage de la composition adhérente d'encollage exempte d'amidon pour lier ensemble les filaments, afin de fournir un fil non torsadé encollé ;
la distribution d'une résine thermoplastique fondue (122) autour du fil non torsadé encollé avant sa coextrusion, la composition d'encollage devenant ductile dans la résine thermoplastique fondue afin de libérer les filaments de verre non torsadés pour un mouvement à l'intérieur de la résine thermoplastique fondue et vers l'intérieur du fil de manière radiale à l'intérieur de la résine thermoplastique fondue ; et
la coextrusion du fil non torsadé et de la résine thermoplastique fondue pour déplacer les filaments de verre non torsadés de manière latérale dans leur longueur à l'intérieur de la résine thermoplastique fondue, et pour fournir au fil non torsadé une section transversale sensiblement ronde, le fil étant non torsadé et étant enduit d'un revêtement fin sensiblement uniforme de la résine thermoplastique, et la résine thermoplastique pénétrant dans une surface externe des filaments, au niveau d'une surface externe du paquet de fils, et y adhérant.

2. Procédé selon la revendication 1, comprenant: le chauffage d'une surface du fil non torsadé et de la composition d'encollage exempte d'amidon à une température de fusion de la composition d'encollage exempte d'amidon avant la coextrusion du fil et de la résine.

3. Procédé selon la revendication 1, comprenant :
la combinaison de la composition d'encollage exempte d'amidon (118) avec une composition filmogène ; et
le chauffage d'une surface du fil non torsadé à au moins une température de fusion de la composition d'encollage exempte d'amidon avec la composition filmogène avant la distribution d'une résine thermoplastique fondue autour du fil non torsadé.

4. Procédé selon la revendication 1, comprenant: le chauffage d'une surface du fil non torsadé à une température d'une résine thermoplastique fondue avant la distribution de la résine thermoplastique fondue autour du fil non torsadé.

5. Procédé selon la revendication 1, comprenant : l'emballage du fil encollé pour produire un fil de gâteau.

6. Procédé selon la revendication 1, dans lequel la composition d'encollage exempte d'amidon (118) comprend une composition filmogène et a un point de fusion compris entre environ 40 °C et 50 °C.

7. Procédé selon la revendication 1, dans lequel la composition d'encollage exempte d'amidon (118) est présente sur les filaments de verre dans une plage comprise entre 0,4 % et 1,00 %.
